# EUROPÄISCHE PATENTANMELDUNG

(11) **EP 2 145 534 A2**
(43) Veröffentlichungstag der Anmeldung: **20.01.2010**
(21) Anmeldenummer: 09162324.9
(22) Anmeldetag: 09.06.2009
(51) Int. Cl.: A01K 5/01

(54) **Fressnapf**

(30) Priorität: 18.07.2008 DE 202008009678 U
(71) Anmelder: Asoc Angeles De Los Animales, 29110 Monda Malaga (ES)
(72) Erfinder: Kampling, Gerhard, Hans, 29110 Monda Malaga (ES)
(74) Vertreter: Viering, Hans-Martin

(57) **Zusammenfassung**

Fressnapf für Tiere, aufweisend eine Bodenplatte (10), eine umlaufende Außenwand (20), die sich vom Umfangsrand der Bodenplatte (10) nach oben erstreckt, eine umlaufende zwischenwand (30), die sich im Abstand von der Außenwand (20) von der Bodenplatte (10) nach oben erstreckt, und eine umlaufende Innenwand (40), die sich im Abstand von der Zwischenwand (30) von der Bodenplatte (10) nach oben erstreckt, so dass von der Bodenplatte (10), der Außenwand (20), der Zwischenwand (30) und der Innenwand (40) drei voneinander getrennte, nach oben offene Kammern (100, 200, 300) gebildet sind.

## Beschreibung

Die Erfindung betrifft einen Fressnapf für Tiere, und insbesondere einen Fressnapf für Hunde.

Beispielsweise Hunde sind in ihrer Anatomie, ihrer Physiologie und in ihrem Verhalten immer noch Raubtiere mit Reiß- und Fangzähnen, mit einem Schlingrachen und einem extrem dehnungsfähigen Magen, der als Vorratsspeicher fungiert. Das bedeutet, Hunde sind so genannte Schlingfresser, die ihr Fressen schlingen.

Jedoch kann zu schnelles, hastiges Fressen, das oftmals mit Luftschlucken einhergeht, bei den Hunden zu einer ernsthaften Erkrankung, wie beispielsweise einer Magendrehung, Magenüberdehnung, Schlundverstopfung oder dergleichen, führen. Als eine der Ursachen für eine Magendrehung, der in der Regel eine massive Erweiterung oder Aufblähung des Magens voraus geht, wird beispielsweise Überfressen und Schlucken von Luft bei zu hastigem Fressen oder Saufen angesehen.

Das bedeutet, dass ein Ziel darin gesehen wird, Hunde zu langsamerem Fressen zu zwingen. Typischerweise wird Hunden das Futter in Schüsseln, Schalen, Näpfen oder dergleichen vorgesetzt. Um das Risiko eines Überfressens zu minimieren, kann eine bestimmte Menge an Futter in die Schüsseln gegeben werden. Jedoch sind die Hunde dadurch nicht daran gehindert, die vorgesetzte Menge innerhalb kürzester Zeit hinunter zu schlingen. Bekannt ist beispielsweise, dass man Hunden, die ihr Futter zu hastig hinunterschlingen, größere Steine in den Futternapf legen kann, um sie zu einer langsameren Futteraufnahme zu bringen.

Aus den Dokumenten US 2006/0005774 A1 und US 2006/0213447 A1 ist beispielsweise ein Fressnapf für Hunde bekannt, dessen Gestaltung die Hunde zu langsamerem Fressen zwingen soll. Der Fressnapf ist im Wesentlichen eine zylindrische Schale mit einer Bodenplatte und einer Umfangswand, wobei auf der Bodenplatte zwei oder drei im Wesentlichen kegelstumpfförmige Vorsprünge angeordnet sind, die sich im Abstand voneinander etwa bis zum oberen Rand der Schale erstrecken. Von den Vorsprüngen in dem Fressnapf sollen Hindernisse gebildet werden, durch welche die mögliche Geschwindigkeit der Nahrungsaufnahme eines Hundes verringert wird.

Ein weiterer Fressnapf für Hunde, der dazu dienen soll, den Hund zum langsameren Fressen zu zwingen, ist beispielsweise aus dem Dokument US 7,207,291 B1 bekannt. Der Fressnapf ist im Wesentlichen eine zylindrische Schale mit einer Bodenplatte und einer Umfangswand, wobei sich im Zentrum der Bodenplatte ein im Wesentlichen kegelstumpfförmiger Vorsprung befindet, der sich bis etwa zum oberen Rand der Schale erstreckt. Ferner erstrecken sich entlang der Bodenplatte von dem kegelstumpfförmigen Vorsprung bis zu der Umfangswand einige von der Bodenfläche leicht vorstehende radiale Rippen, zwischen denen folglich jeweils ein flaches Fach gebildet ist. Derartige Gestaltungen, von denen der Ringraum zwischen einer umgebenden Außenwand und einem zentralen Vorsprung in mehrere Fächer unterteilt wird, die in der Umfangsrichtung des Ringraums mehr oder weniger voneinander getrennt sind, sind auch aus dem Dokument US 2008/0072829 A1 bekannt.

Durch die Erfindung wird die Aufgabe gelöst, einen Fressnapf für Tiere bereitzustellen, der Hunde und insbesondere die Schlingfresser unter ihnen, daran hindert, eine zu große Futtermenge zu schnell verschlingen zu können.

Die Erfindung ist in den Patentansprüchen beschrieben.

Der Fressnapf für Tiere gemäß einer bevorzugten Ausführungsform der Erfindung weist eine Bodenplatte, eine umlaufend ausgebildete Außenwand, die sich vom Umfangsrand der Bodenplatte nach oben erstreckt, eine umlaufend ausgebildete Zwischenwand, die sich im Abstand von der Außenwand von der Bodenplatte nach oben erstreckt, und eine umlaufend ausgebildete Innenwand auf, die sich im Abstand von der Zwischenwand von der Bodenplatte nach oben erstreckt, so dass von der Bodenplatte, der Außenwand, der Zwischenwand und der Innenwand drei voneinander getrennte, nach oben offene Fress-Kammern aus einer zentralen Innenkammer, einer diese vorzugsweise vollständig umgebenden Zwischenkammer und einer diese vorzugsweise vollständig umgebenden Außenkammer ausgebildet sind.

Bei der Verwendung eines derartigen Fressnapfes kann das Futter in die drei voneinander getrennten Kammern gegeben werden. Auf diese Weise wird es einem Hund erschwert, zu schnell zu viel Futter aufzunehmen, da der Hund gezwungen ist, das Futter nacheinander aus den einzelnen Kammern zu fressen. Die Größe des Fressnapfes und damit der Kammern ist dabei bevorzugt so gewählt, dass der Hund das Futter im Wesentlichen nur mit der Zunge aus den Kammern aufnehmen kann und sein Maul nicht vollständig in das Futter eintauchen kann. Es versteht sich, dass das Futter nicht stets in alle drei Kammern eingebracht werden muss und dass die Größe des Fressnapfes an die Größe bestimmter Hunderassen anpassbar ist.

Gemäß einer Ausführungsform der Erfindung ist die Bodenplatte des Fressnapfes rund, oval, quadratisch, rechteckig, dreieckig oder polygonal, so dass auch die Außenwand, bevorzugt auch die Zwischenwand und weiter bevorzugt auch die Innenwand in einer Ebene parallel zu der Bodenplatte eine runde, ovale, quadratische, rechteckige, dreieckige oder polygonale Fläche einschließen.

Die Bodenplatte kann auch aus einzelnen Segmenten zusammengesetzt sein, die einen jeweiligen Bodenabschnitt zwischen der Außenwand und der Zwischenwand, zwischen der Zwischenwand und der Innenwand sowie innerhalb der umlaufenden Innenwand bilden und diese miteinander verbinden und an die Umfangsgestalt der die jeweilige Kamme umgrenzenden Wand angepasst sind. Das bedeutet, dass wenn der Fressnapf gemäß einer Ausführungsform eine runde Bodenplatte aufweist, ist diese runde Bodenplatte von einem inneren, bevorzugt runden Bodenplattensegment, einem mittleren ringförmigen, bevorzugt runden Bodenplattensegment und einem äußeren ringförmigen Bodenplattensegment mit runder Außenkontur ausgebildet, von denen der Boden der jeweiligen Kammer ausgebildet wird.

Die höhen der Innenwand, der Außenwand können gleich oder unterschiedlich sein. Gemäß einer weiteren Ausgestaltung des Fressnapfes weist die Innenwand eine größere Höhe auf als die Zwischenwand, und weist die Zwischenwand eine größere Höhe auf als die Außenwand. Dies macht es den Hunden einfacher, an das Fressen zu gelangen ohne ihnen die Möglichkeit einzuräumen, das Futter in großen Mengen schnell schlingen oder inhalieren zu können.

Eine weitere Ausgestaltung des Fressnapfes sieht vor, dass der obere freie Umfangsrand der Außenwand eine größere Fläche einschließt als der an der Bodenplatte angeordnete Umfangsrand der Außenwand. Das bedeutet, dass gemäß einer Ausgestaltung die Außenwand von der Bodenplatte her nach oben hin beispielsweise kontinuierlich trichterförmig oder kelchförmig nach außen geneigt sein kann.

Ferner kann auch vorgesehen sein, dass der obere freie Umfangsrand der Zwischenwand eine größere Fläche einschließt als der an der Bodenplatte abgestützte Umfangsrand der Zwischenwand. Das bedeutet, dass gemäß einer Ausgestaltung die Zwischenwand von der Bodenplatte her nach oben hin beispielsweise kontinuierlich trichterförmig oder klechförmig nach außen geneigt sein kann.

Gemäß einer weiteren Ausgestaltung des Fressnapfes ist die Öffnungsweite der Kammer zwischen der Innenwand und der Zwischenwand größer als der Abstand zwischen der Innenwand und der Zwischenwand an der Bodenplatte.

Ferner kann bei dem Fressnapf die Öffnungsweite der Kammer zwischen der Zwischenwand und der Außenwand größer sein als der Abstand zwischen der Zwischenwand und der Außenwand an der Bodenplatte.

Mittels der vorgenannten Ausgestaltung kann vorgesehen sein, dass die Öffnungsweite sowohl der äußeren Kammer als auch der mittleren Kammer jeweils größer ist als deren entsprechende Weite am Boden der Kammer. Die größeren Öffnungsweiten ermöglichen es dem Hund leichter, an das Futter zu gelangen ohne dass dem Hund dadurch eine Möglichkeit geboten wird, das Futter schlingen bzw. inhalieren zu können, da der Hund mit seiner Schnauze zwar leichter an das in der Kammer liegende Futter herankommt, der Hund das Futter aber im Wesentlichen mit seiner Zunge aus der Kammer aufnehmen muss.

Gemäß einem Ausführungsbeispiel kann der Fressnapf einstückig hergestellt sein. Alternativ kann der Fressnapf aber auch aus mehreren Teilen zusammengesetzt sein.

Beispielsweise kann der Fressnapf aus Ton, aus Kunststoff oder aus Metall unter Verwendung üblicher Fertigungsverfahren hergestellt sein.

In einer weiteren Ausführungsform sind die Höhen der Außenwand, der Zwischenwand und der Innenwand über der Unterseite des Bodens jeweils gleich, wobei die Tiefen der drei Kammern gleich sein können oder bevorzugt die Tiefe der Innenkammer kleiner als die der Zwischenkammer und der Außenkammer ist und die Tiefe der Zwischenkammer ihrerseits gleich oder kleiner als die der Außenkammer ist. Im Übrigen können bei dieser Ausführungsform eines oder mehrere der zuvor beschriebenen Merkmale ebenfalls vorgesehen sein.

Bevorzugt ist insbesondere bei dieser Ausführungsform die Zwischenwand vertikal oder in Richtung nach oben und zur Innenwand hin leicht geneigt, wobei in weiterer Ausgestaltung die Außenwand und die Zwischenwand in Richtung nach oben und außen leicht geneigt sind und dabei der Neigungswinkel der Außenwand größer als derjenigen der Innenwand sein kann. Auch kann insbesondere bei dieser Ausführungsform die lichte Weite der Zwischenkammer kleiner oder größer als diejenige der Außenkammer sein.

Nachfolgend werden Ausführungsbeispiele gemäß der Erfindung unter Bezugnahme auf die beigefügte Zeichnung näher erläutert. In der Zeichnung zeigt:
Figur 1 eine schematische Darstellung eines Fressnapfes gemäß einer ersten Ausführungsform der Erfindung in
Draufsicht und Figur 2 einen Querschnitt A-A gemäß Figur 1.
Figur 3 eine schematische Darstellung eines Fressnapfes gemäß einer zweiten Ausführungsform der Erfindung in Draufsicht und Figur 4 einen Querschnitt A-A gemäß Figur 3.
Figur 5 eine schematische Darstellung eines Fressnapfes gemäß einer dritten Ausführungsform der Erfindung in Draufsicht und Figur 6 einen Querschnitt A-A gemäß Figur 5.

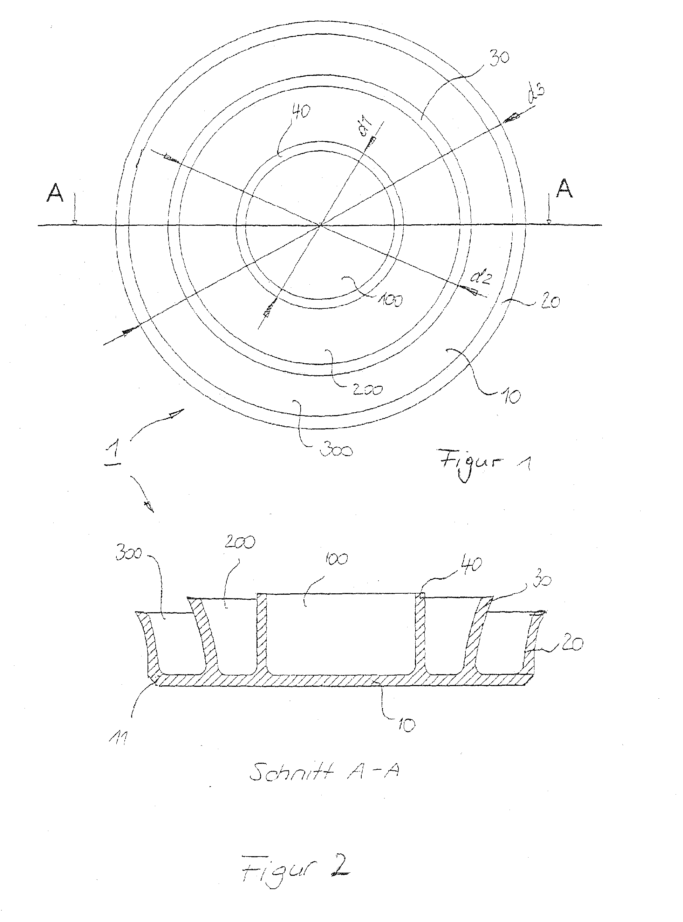

Wie aus den Figuren 1 und 2 ersichtlich ist, weist der schematisch dargestellte Fressnapf 1 gemäß dem dargestellten Ausführungsbeispiel eine im Wesentlichen runde ebene Bodenplatte 10 auf. Vom Umfangsrand 11 der Bodenplatte 10 erstreckt sich um den Umfangsrand 11 herum eine umlaufende Außenwand 20. In einem Abstand von der Außenwand 20 erstreckt sich eine von der Außenwand im wesentlichen konzentrisch umgebene umlaufende Zwischenwand 30 von der Bodenplatte 10 nach oben hin, und in einem Abstand von der Zwischenwand 30 erstreckt sich eine von der Zwischenwand im wesentlichen konzentrisch umgebene, ihrerseits das Zentrum des Napfes im wesentlichen konzentrisch umgebende umlaufende Innenwand 40 von der Bodenplatte 10 nach oben hin, so dass von der Bodenplatte 10, der Außenwand 20, der Zwischenwand 30 und der Innenwand 40 eine runde Innenkammer 100, eine ringförmige Zwischenkammer 200 und eine ringförmige Außenkammer 300 gebildet sind, die jeweils im wesentlichen radial zur Bodenplatte mittels der jeweiligen Wand voneinander getrennt sind. Es versteht sich, dass die Grundfläche der Bodenplatte 10 der Grundfläche eines ansonsten üblichen Fressnapfes mit einer Außenwand, jedoch ohne Zwischenwand und Innenwand entsprechen kann.

Aufgrund der Unterteilung des Fressnapfes 1 in drei voneinander in radialer Richtung separate Futteraufnahmebereiche kann je nach Bedarf beispielsweise in jede dieser Kammern 100, 200, 300 aus einer zentralen Innenkammer 100, einer diese ringförmig umgebenden Zwischenkammer 200, und einer diese ringförmig umgebenden Außenkammer 300 oder in nur eine oder in zwei der Kammern 100, 200, 300 Futter für beispielsweise Hunde hineingetan werden. Da die Kammern 100, 200, 300 des Fressnapfes 1 jeweils einen relativ kleinen Aufnahmebereich für Futter aufweisen, kann das Tier, wenn es beispielsweise ein sogenannter Schlingfresser ist, das Futter aus den einzelnen Kammern 100, 200, 300 nur nacheinander herausnehmen. Ferner ist das Tier aufgrund der relativ kleinen Kammern 100, 200, 300 des Fressnapfes 1 gezwungen, das Futter mit seiner Zunge langsam aus den Kammern 100, 200, 300 herauszuholen, so dass das Tier nicht in der Lage ist, das Futter hastig zu verschlingen oder gar zu inhalieren, wie dies bei einem Fressnapf gleicher Größe ohne separate Kammern möglich ist. Wenn die Hunde mittels des Fressnapfes 1 gezwungen sind, langsamer zu fressen, werden nicht nur unerwünschte Krankheiten eingeschränkt, vielmehr führt dies auch dazu, dass bei dem Hund die Speichelbildung angeregt und die Zahnpflege gefördert wird.

Wie ferner aus Figur 2 ersichtlich ist, weist bei dem beispielgebenden Fressnapf 1 die Innenwand 40 eine etwas größere Höhe auf als die Zwischenwand 30 und die Zwischenwand 30 eine etwas größere Höhe auf als die Außenwand 20.

Wie ferner ersichtlich ist, schließt der obere freie Umfangsrand der Außenwand 20 eine größere Fläche ein als der an der Bodenplatte 10 angeordnete Umfangsrand der Außenwand 20. Darüber hinaus schließt auch der obere freie Umfangsrand der Zwischenwand 30 eine größere Fläche ein als der an der Bodenplatte 10 abgestützte Umfangsrand der Zwischenwand 30. Dies wird erreicht, indem sowohl die Außenwand 20 als auch die Zwischenwand 20 nach außen hin jeweils eine leichte trichterförmige oder kelchförmige Neigung oder Wölbung aufweisen, wobei diese Neigung oder Wölbung der beiden Wände unterschiedlich sein kann. Beispielsweise ist nach der Ausführungsform aus Fig. 2 die Zwischenwand 30 etwas stärker ausgewölbt als die Außenwand 20, so dass die Außenkammer 300 von ihrer oberen offenen Seite her zur Bodenseite hin leicht erweitert ausgebildet ist. Gemäß dem Ausführungsbeispiel aus Fig. 2 ist hingegen die Innenwand 40 zylindrisch, so dass die Innenkammer 100 ebenfalls zylindrisch, und die Zwischenkammer 200 sich von ihrer oberen offenen Seite her zur Bodenfläche hin sich leicht verengend ausgebildet ist.

Somit kann insbesondere vorgesehen sein, dass die Öffnungsweite der Kammer 200 zwischen der Innenwand 40 und der Zwischenwand 30 größer ist, als der Abstand zwischen der Innenwand 40 und der Zwischenwand 30 an der Bodenplatte 10. Anschaulich bedeutet das, dass die Kammer 200 im Querschnitt in Richtung zu ihrer Öffnung hin kelch- oder trichterförmig aufgeweitet ist.

Auch wenn dies in der Zeichnung nicht dargestellt ist, kann ebenso die Öffnungsweite der Kammer 300 zwischen der Zwischenwand 30 und der Außenwand 20 größer sein als der Abstand zwischen der Zwischenwand 30 und der Außenwand 20 an der Bodenplatte 10. Demzufolge kann auch die Kammer 300 im Querschnitt in Richtung zu ihrer Öffnung hin kelch- oder trichterförmig aufgeweitet sein.

Der Fressnapf 1 gemäß den in Figuren 1 bis 6 dargestellten Ausführungsbeispielen ist jeweils einstückig hergestellt. Beispielsweise kann der Fressnapf aus Ton, aus Kunststoff oder aus Metall gefertigt sein. Das heißt, der Fressnapf kann beispielsweise auf herkömmliche Weise getöpfert werden. Der Fressnapf kann auch aus Kunststoff mittels Kunststoffspritzgießens hergestellt werden. Es ist auch möglich, den Fressnapf einstückig oder mehrstückig aus Metall zu fertigen.

Wie bereits erwähnt, kann die Größe des Fressnapfes in Abhängigkeit von Hunderassen, für die der Fressnapf verwendet werden soll, unterschiedlich gestaltet werden, wobei das beschriebene Design des Fressnapfes 1 beibehalten bleiben kann. Wenn beispielsweise die Bodenplatte 10 eines Fressnapfes 1 für bestimmte Hunde an der Außenseite der Außenwand 20 einen Durchmesser von etwa 20 cm aufweist, kann der Außendurchmesser d1 der inneren Kammer 100 beispielsweise 9 cm betragen, der Außendurchmesser d2 der mittleren Kammer 200, gemessen am freien oberen Rand der Zwischenwand 30, beispielsweise 16,5 cm betragen und der Außendurchmesser d3 der äußeren Kammer 300, gemessen am freien oberen Rand der Außenwand 20, beispielsweise 22 cm betragen. Die Dicke der Bodenplatte 10, der Außenwand 20, der Zwischenwand 30 und der Innenwand 40 kann, abhängig vom verwendeten Material und dem Herstellungsverfahren, zwischen 0,2 cm und 0,8 cm betragen. Bei diesem Ausführungsbeispiel kann die Höhe der Innenwand 40, gemessen von der Unterseite der Bodenplatte 10, 5cm betragen, die Höhe der Zwischenwand 30, gemessen von der Unterseite der Bodenplatte 10, 4,8 cm betragen und die Höhe der Außenwand 20, gemessen von der Unterseite der Bodenplatte 10, 4 cm betragen.

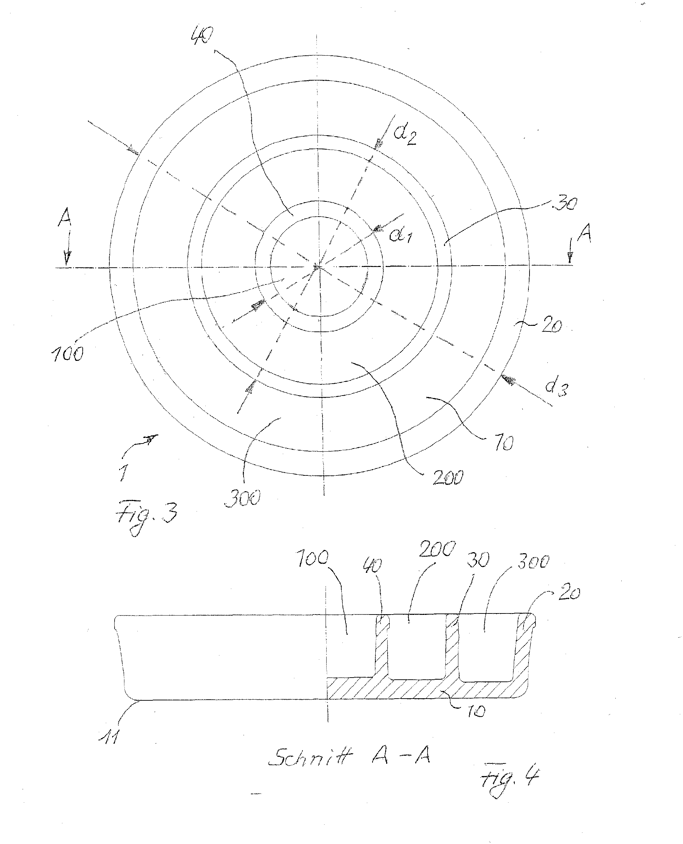

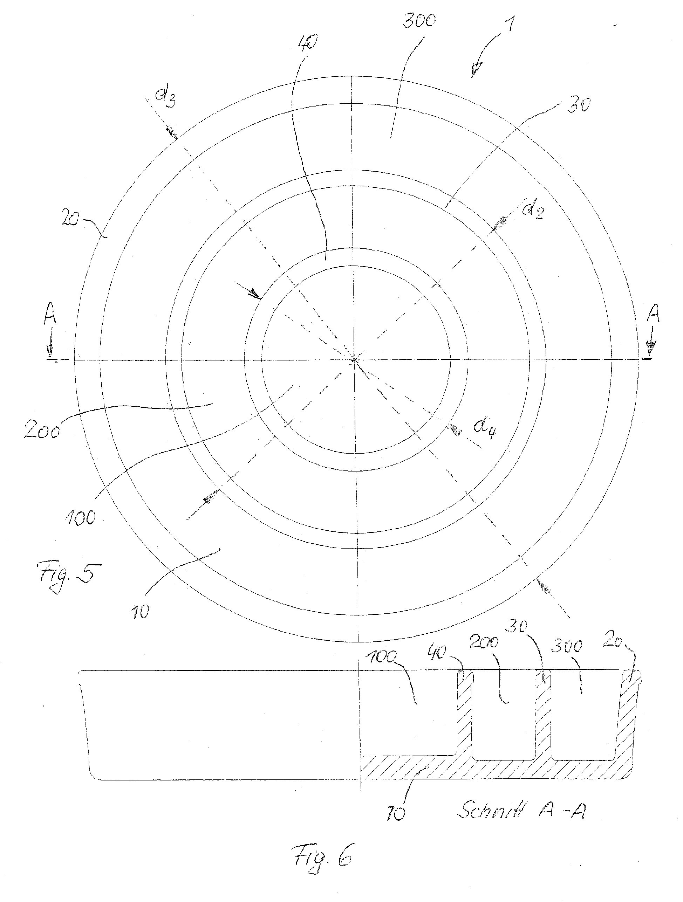

Aus den Figuren 3 und 4 einerseits und 5 und 6 andererseits sind zwei weitere Ausführungsformen ersichtlich, bei denen die Höhen der Außenwand 20, der Zwischenwand 30 und der Innenwand 40 über der Unterseite der Bodenwand 10 gleich sind. Ihre Höhen über der jeweiligen Oberseite des Bodens 10 können hingegen unterschiedlich sein. Die Figuren 3 und 4 zeigen eine Ausführungsform für einen kleineren Fressnapf (beispielsweise mit einem Außendurchmesser von etwa 16 cm), und die Figuren 5 und 6 zeigen eine größere Ausführungsform des Fressnapfs (beispielsweise mit einem Außendurchmesser von 22 cm).

Die Zwischenwand 30 ist bei diesen beiden Ausführungsformen in Richtung nach oben und außen um beispielsweise 1 Winkelgrad gegenüber der Vertikalen geneigt (Figuren 5 und 6) oder vertikal (Figuren 3 und 4). Auch die Innenwand 40 und die Außenwand 20 sind bei diesen beiden Ausführungsformen in Richtung nach oben und außen geneigt, wobei der Neigungswinkel der Außenwand (beispielsweise 6 Winkelgrad) gegenüber der Vertikalen größer ist als derjenige der Innenwand (beispielsweise 2 - 3 Winkelgrad).

Bei der kleineren Ausführungsform gemäß den Figuren 3 und 4 ist außerdem die lichte Weite (z.B. 20 mm) der Zwischenkammer 200 kleiner als diejenige (z.B. 22 mm am Boden und 34 mm am oberen Rand der Außenwand 20) der Außenkammer 300. Außerdem sind die Tiefen der Kammern 100 - 300 unterschiedlich, wobei die Tiefe der Innenkammer 100 kleiner als die Tiefe der Zwischenkammer 200 ist und deren Tiefe ihrerseits kleiner als die der Außenkammer 300 ist.

Demgegenüber ist die lichte Weite der Zwischenkammer 200 bei der größeren Ausführungsform gemäß den Figuren 5 und 6 mit beispielsweise etwa 30 mm größer als diejenige (z.B. 28 mm am oberen Rand der Außenwand und 22 - 24 mm am Boden) der Außenkammer 300. Außerdem sind die Tiefen der Außenkammer 300 und der Zwischenkammer 200 gleich, wohingegen die Tiefe der Innenkammer 100 kleiner als die der anderen beiden Kammern ist.

Wie weiter aus den Figuren 4 und 6 ersichtlich, sind bei beiden dieser Ausführungsformen die oberen Ränder der Innenwand 40 und der Außenwand 20 abgerundet, wobei an beiden oberen Rändern eine kleine Nase ausgebildet ist, die an der Außenseite der Wände leicht absteht. Die Zwischenwand 30 beider Ausführungsformen hingegen endet nach oben mit rechteckigem Querschnitt, wobei die Oberkanten allerdings gebrochen sind.

Wenn beispielsweise die Außenwand 20 bei der Ausführungsform aus den Figuren 3 und 4 an der Außenseite ihres oberen Randes einen Durchmesser d3 von etwa 16 cm aufweist, kann der Außendurchmesser d2 der der mittleren Kammer 200, gemessen am freien oberen Rand der Zwischenwand 30, beispielsweise etwa 9,6 cm betragen und der Außendurchmesser d1 der inneren Kammer 3 der äußeren Kammer 300, gemessen am freien oberen Rand der Außenwand 20, beispielsweise 4,8 cm betragen. Die Tiefe der Außenkammer 300 kann hierbei z.B. 2,6 cm sein, die Tiefe der Zwischenkammer 200 kann z.B. 2,5 cm sein, wohingegen die Tiefe der Innenkammer 100 z.B. 2,4 cm ist. Die Dicke der Bodenplatte 10, der Außenwand 20, der Zwischenwand 30 und der Innenwand 40 kann, abhängig vom verwendeten Material und dem Herstellungsverfahren, zwischen 0,2 cm und 0,8 cm betragen. Bei diesem Ausführungsbeispiel können die Höhe der Innenwand 40, gemessen von der Unterseite der Bodenplatte 10, die Höhe der Zwischenwand 30, gemessen von der Unterseite der Bodenplatte 10, und die Höhe der Außenwand 20, gemessen von der Unterseite der Bodenplatte jeweils 3,2 cm betragen.

Wenn hingegen beispielsweise die Bodenplatte 10 des Fressnapfes 1 gemäß der Ausführungsform aus den Figuren 5 und 6 an der Außenseite des Bodens 10 einen Durchmesser von etwa 21 cm aufweist, kann der Außendurchmesser d1 der inneren Kammer 100 beispielsweise 8,8 cm betragen, der Außendurchmesser d2 der mittleren Kammer 200, gemessen am freien oberen Rand der Zwischenwand 30, beispielsweise 14,6 cm betragen und der Außendurchmesser d3 der äußeren Kammer 300, gemessen am freien oberen Rand der Außenwand 20, beispielsweise 21,8 cm betragen. Die Tiefe der Außenkammer und der Zwischenkammer 200 kann z.B. 3,5 cm sein, wohingegen die Tiefe der Innenkammer 100 z.B. 3,3 cm ist. Die Dicke der Bodenplatte 10, der Außenwand 20, der Zwischenwand 30 und der Innenwand 40 kann, abhängig vom verwendeten Material und dem Herstellungsverfahren, zwischen 0,2 cm und 0,8 cm betragen. Bei diesem Ausführungsbeispiel können die Höhe der Innenwand 40, gemessen von der Unterseite der Bodenplatte, die Höhe der Zwischenwand 30, gemessen von der Unterseite der Bodenplatte 10, und die Höhe der Außenwand 20, gemessen von der Unterseite der Bodenplatte jeweils 4,2 cm betragen.

Es versteht sich, dass die in der Zeichnung dargestellten Fressnäpfe lediglich bevorzugte Ausführungsformen von vielen möglichen Ausführungsformen repräsentieren. Anschaulich bedeutet das, dass zumindest die Zwischenwand 30 und die Innenwand 40 beispielsweise jeweils von zwei nebeneinander angeordneten Materialabschnitten gebildet sein können, die an ihrer der Bodenplatte abgewandten freien Oberseite miteinander verbunden sind. Wenn der Fressnapf beispielsweise aus Metall im Tiefziehverfahren hergestellt wird, kann beispielsweise der innere Materialabschnitt der Innenwand bodenseitig mit dem inneren runden Bodenplattensegment verbunden sein, während der äußere Materialabschnitt der Innenwand bodenseitig mit dem Innenumfangsrand des mittleren ringförmigen Bodenplattensegments verbunden ist, und kann der innere Materialabschnitt der Zwischenwand bodenseitig mit dem Außenumfangsrand des mittleren ringförmigen Bodenplattensegments verbunden sein, während der äußere Materialabschnitt der Zwischenwand bodenseitig mit dem Innenumfangsrand des äußeren ringförmigen Bodenplattensegments verbunden ist, und kann die Außenwand bodenseitig mit dem Außenumfangsrand des äußeren ringförmigen Bodenplattensegments verbunden sein. Auf diese Weise kann zum Beispiel ein Fressnapf gemäß der Erfindung bereitgestellt werden, der drei voneinander getrennte Kammern zum Aufnehmen von Futter für Tier aufweist.

Die Wände 20, 30 und 40 einerseits und die Kammern 200 und 300 andererseits sind gemäß der Erfindung jeweils ringförmig gestaltet. Dies bedeutet jedoch nicht, dass sie jeweils kreisringförmig ausgebildet sind. Vielmehr können sie auch in anderer geometrischer Form in ihrer jeweiligen Umfangsrichtung durchgehend und in sich geschlossen ausgebildet sein, wobei auch ein eckiger oder winkelförmiger oder wellenförmiger Verlauf der Wände wie auch deren geometrisch unterschiedlicher Verlauf und/oder eine in Umfangsrichtung variable Weite der Kammern zugelassen ist. Außerdem ist eine konzentrische Anordnung der Wände 20, 30 und 40 dargestellt; jedoch ist auch ihre exzentrische Anordnung möglich. Eine wenigstens im Wesentlichen konstante Öffnungsweite der Kammern in ihrer jeweiligen Umfangsrichtung wird jedoch bevorzugt.

## Patentansprüche

1. Fressnapf für Tiere, aufweisend
eine Bodenplatte (10) mit einem Zentrum,
eine das Zentrum umgebende Innenwand (40), die sich im Abstand von dem Zentrum von der Bodenplatte (10) aus nach oben erstreckt,
eine die Innenwand (40) umgebende Zwischenwand (30), die sich im Abstand von der Innenwand (40) von der Bodenplatte (10) aus nach oben erstreckt, und
eine die Zwischenwand (30) umgebende Außenwand (20), die sich im Abstand von der Zwischenwand (30) von dem Umfangsrand der Bodenplatte (10) aus nach oben erstreckt,
so dass von der Innenwand (40) eine nach oben offene innere Fress-Kammer (100), von der Innenwand (40) und der Zwischenwand (30) eine nach oben offene mittlere Fress-Kammer (200), die von der inneren Kammer getrennt ist, und von der Außenwand (20) und der Zwischenwand eine nach oben offene äußere Fress-Kammer (100) umgrenzt werden, die von der mittleren Kammer getrennt ist.

2. Fressnapf gemäß Anspruch 1, wobei die Bodenplatte (10) rund, oval, quadratisch, rechteckig, dreieckig oder polygonal ist.

3. Fressnapf gemäß einem der Ansprüche 1 oder 2, wobei die Bodenplatte von den Boden der Kammern bildenden Bodenplattensegmenten gebildet ist.

4. Fressnapf gemäß einem der Ansprüche 1 bis 3, wobei die Innenwand (40) eine größere Höhe aufweist als die Zwischenwand (30) und die Zwischenwand (30) eine größere Höhe aufweist als die Außenwand (40).

5. Fressnapf gemäß einem der Ansprüche 1 bis 4, wobei der obere freie Umfangsrand der Außenwand (20) eine größere Fläche einschließt als der an der Bodenplatte (10) angeordnete Umfangsrand der Außenwand (20).

6. Fressnapf gemäß einem der Ansprüche 1 bis 5, wobei der obere freie Umfangsrand der Zwischenwand (30) eine größere Fläche einschließt als der an der Bodenplatte (10) angeordnete Umfangsrand der Zwischenwand (30).

7. Fressnapf gemäß einem der Ansprüche 1 bis 6, wobei die Öffnungsweite der Kammer (200) zwischen der Innenwand (40) und der Zwischenwand (30) größer ist als der Abstand zwischen der Innenwand (40) und der Zwischenwand (30) an der Bodenplatte (10).

8. Fressnapf gemäß einem der Ansprüche 1 bis 7, wobei die Öffnungsweite der Kammer (300) zwischen der Zwischenwand (30) und der Außenwand (20) größer ist als der Abstand zwischen der Zwischenwand (30) und der Außenwand (20) an der Bodenplatte (10).

9. Fressnapf gemäß einem der Ansprüche 1 bis 8, wobei der Fressnapf (1) einstückig hergestellt ist.

10. Fressnapf gemäß einem der Ansprüche 1 bis 9, hergestellt aus Ton, aus Kunststoff oder aus Metall.

11. Fressnapf gemäß einem der Ansprüche 1 bis 3 und 5 - 10, wobei die Höhen der Außenwand (20), der Zwischenwand (30) und der Innenwand (40) gleich sind und die Tiefe der Innenkammer (100) kleiner als die Tiefe der Zwischenkammer (200) und der Außenkammer (300) ist, wobei die Tiefe der Zwischenkammer (200) gleich der Tiefe der Außenkammer (300) oder kleiner als deren Tiefe ist.

12. Fressnapf nach Anspruch 11, wobei die Zwischenwand (30) vertikal oder an ihrer Außenseite in Richtung nach oben zur Innenwand (40) hin leicht geneigt ist, wobei ihre Innenseite in Richtung nach oben und außen leicht geneigt sein kann.

13. Fressnapf nach Anspruch 11, wobei die Außenwand (20) wenigstens an ihrer Innenseite, und die Zwischenwand (30) wenigstens an ihrer Innenseite in Richtung nach oben und außen geneigt sind.

14. Fressnapf nach Anspruch 13, wobei der Neigungswinkel der Außenwand größer als der der Zwischenwand ist.

15. Fressnapf nach einem der Ansprüche 11 bis 14, wobei die lichte Weite der Zwischenkammer (200) kleiner oder größer als die der Außenkammer (300) ist.
